(19) Europäisches Patentamt / European Patent Office / Office européen des brevets

(11) **EP 3 088 130 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(51) Int Cl.:
*B23Q 17/24* *(2006.01)*       *G01B 11/30* *(2006.01)*
*G01B 11/24* *(2006.01)*       *G01N 21/47* *(2006.01)*

(21) Anmeldenummer: **16167295.1**

(22) Anmeldetag: **27.04.2016**

(54) **VERFAHREN ZUR BERÜHRUNGSLOSEN BEURTEILUNG DER OBERFLÄCHENBESCHAFFENHEIT EINER KUGELLAUFBAHN EINES KUGELGEWINDETRIEBS**

METHOD FOR CONTACTLESS EVALUATION OF THE SURFACE PROPERTIES OF A BALL RACEWAY OF A BALL SCREW DRIVE

PROCEDE D'EVALUATION SANS CONTACT DE L'ÉTAT DE SURFACE D'UN CHEMIN DE ROULEMENT D'UN ENTRAINEMENT A BILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015 DE 102015106738**

(43) Veröffentlichungstag der Anmeldung:
**02.11.2016 Patentblatt 2016/44**

(73) Patentinhaber: **Brodmann Technologies GmbH**
**76476 Bischweier (DE)**

(72) Erfinder:
• **Brodmann, Rainer**
**76476 Bischweier (DE)**
• **Brodmann, Boris**
**76131 Karlsruhe (DE)**

(74) Vertreter: **Schaumburg und Partner**
**Patentanwälte mbB**
**Postfach 86 07 48**
**81634 München (DE)**

(56) Entgegenhaltungen:
**US-A- 4 644 394**

• **Rainer Brodmann ET AL: "Kenngrößen der Mikrostruktur definiert", QZ, 1. Juli 2008 (2008-07-01), Seiten 46-49, XP055287385, Gefunden im Internet: URL:http://vda-qmc.de/fileadmin/redakteur/presse/Kenngroessen_der_Mikrostruktur_definiert.pdf [gefunden am 2016-07-11]**
• **KUANG-CHAO FAN ET AL: "Development of an automatic cumulative-lead error measurement system for ballscrew nuts", INTERNATIONAL JOURNAL OF ADVANCED MANUFACTURING TECHNOLOGY., Bd. 72, Nr. 1-4, 23. März 2013 (2013-03-23), Seiten 17-23, XP055290786, LONDON; GB ISSN: 0268-3768, DOI: 10.1007/s00170-013-4905-1**
• **Optosurf: "Welligkeiten auf Kugelumlaufspindeln", , 25. Juli 2016 (2016-07-25), XP055291073, Gefunden im Internet: URL:http://optosurf.de/index.php?option=com_content&view=article&id=26:welligkeiten-auf-kugelumlaufspindeln&catid=12&Itemid=155&lang=de [gefunden am 2016-07-25]**
• **ANONYMOUS ED - VDA: "VDA 2009 - Geometrische Produktspezifikation: Oberflächenbeschaffenheit: Winkelaufgelöste Streulichtmesstechnik; Definition, Kenngrößen und Anwendung", VDA EMPFEHLUNG, VDA, DE , vol. VDA 2009 1 July 2010 (2010-07-01), pages 1-14, XP009500116, Retrieved from the Internet: URL:https://www.vda.de/de/services/Publikationen/2009---winkelaufgel-ste-streulichtmesstechnik.html [retrieved on 2017-09-08]**

EP 3 088 130 B1

**Beschreibung**

Die Erfindung betrifft ein Verfahren zur berührungslosen Beurteilung der Oberflächenbeschaffenheit einer Kugellaufbahn eines Kugelgewindetrieb-Werkstücks nach der winkelaufgelösten Streulichtmesstechnik. Bei diesem Verfahren sendet ein optischer Sensor ein Strahlenbündel auf die zu beurteilende Kugellaufbahn einer Kugelgewindespindel oder einer Kugelgewindemutter. Die von einem Messfleck zurückreflektierte Intensität der Strahlung wird mittels eines Zeilensensors mit einer diskreten Anzahl von Fotodetektoren in einem definierten Winkelbereich detektiert und daraus mindestens ein Kennwert ermittelt.

Die winkelaufgelöste Streulichtmesstechnik mit zugehörigem Sensor ist in der VDA-Empfehlung VDA 2009 aus Juli 2010 (VDA Verband der Automobilindustrie) ausführlich beschrieben. Diese Streulichtmesstechnik eignet sich aufgrund der Robustheit des Verfahrens und der hohen Messgeschwindigkeit sowohl zur 100 % Online-Überwachung eines Prozesses, als auch speziell zur berührungslosen Messung der Rauheit quer zur Bearbeitungsrichtung (Querrauheit) und längs zur Bearbeitungsrichtung (Längsrauheit) sowie zur Welligkeitsmessung. Gemessen wird hierbei die Winkelverteilung der Oberfläche einer feinbearbeiteten Oberfläche über rückgestreutes Licht. Daraus können sowohl Kennwerte für die Struktur der Oberfläche als auch Formmerkmale wie z.B. Rundheit, Welligkeit, Rattermarken etc. berechnet werden. Als Kenngröße zur Beurteilung der Beschaffenheit einer Oberfläche kann z.B. die Varianz der Streuwinkelverteilung Aq als Maß für die Mikrostruktur der Oberfläche verwendet werden.

Weiterhin ist die Streulichtmesstechnik in der EP 2 657 686 A1 und der Veröffentlichung "Kenngrößen der Mikrostruktur definiert", Rainer Brodmann et al., QZ Jahrgang 53 (2008), 7, S. 46-49, beschrieben. Der Streulichtsensor erfasst je nach Orientierung die Intensitätsverteilung quer oder längs zur Bearbeitungsrichtung des Werkstücks. Aus der Verteilungskurve können dann statistische Kennwerte berechnet werden, die Informationen über die Quer- oder Längsrauheit enthalten. Die wichtigsten Kennwerte sind hierbei Aq und M, worin M der Mittelwert der Verteilungskurve und damit der Schwerpunkt der Verteilungskurve ist.

In der nicht vorveröffentlichten DE 10 2014 116 966.2 derselben Anmelderin ist die Anwendung der Streulichtmesstechnik an Zahnrändern beschrieben. Der Streulichtsensor umfasst einen Spiegelaufsatz, der in den Raum zwischen Zahnradflanken eintaucht und auf diese Weise eine berührungslose Messung an Flanken in beengter räumlicher Umgebung ermöglicht.

Wie weiter oben erwähnt, betrifft die Erfindung die Anwendung der Streulichtmesstechnik an einem Kugelgewindetrieb-Werkstück. Solche Kugelgewindetriebe werden zunehmend mit Erfolg im Maschinenbau und in der Automobilindustrie eingesetzt. Aufgabe des Kugelgewindetriebs ist es, eine Drehbewegung eines elektromotorischen Antriebs in eine translatorische Bewegung zu überführen. Ein Kugelgewindetrieb-Werkstück umfasst eine Spindel, eine Spindelmutter mit Kugelrückführung sowie Kugeln als Wälzelemente. Die Kugeln stellen eine mechanische Verbindung zwischen der Spindel und der Spindelmutter her, wobei sie sich auf Kugellaufbahnen der Spindelmutter und der Spindel abwälzen. Die Formgenauigkeit, insbesondere die Welligkeit der Kugellaufbahnen und auch die Oberflächenfeinstruktur, wie Rauheit und kleinste Oberflächenfehler wirken sich dabei auf die Laufruhe und die Präzision aus, mit der Stellbewegungen des Kugelgewindetriebs ausgeführt werden können. Insbesondere sind Formfehler, wie Welligkeit und Rauheitsschwankungen auf der Kugellaufbahn Ursache für Verschleiß und vor allem für unerwünschte Geräusche. Der Querschnitt der Kugellaufbahn ist meist ein gotisches Rillenprofil, wobei sich die abwälzende Kugel auf jeweils zwei Druckpunkten oder Kontaktpunkten auf der Gewindespindel und auf der Spindelmutter abstützen. Entscheidend für die Laufeigenschaften der Kugeln des Kugelgewindetriebs ist demnach die Oberflächenbeschaffenheit im Bereich dieser Druckpunkte. Die messtechnische Erfassung dieser Oberflächenbeschaffenheit und deren Prüfung ist somit von erheblicher Bedeutung für die Fertigung und die Qualitätssicherung.

Messtechnisch ist die Welligkeits- und Rauheitsmessung auf der Kugellaufbahn eines Kugelgewindetrieb-Werkstücks im Bereich der Druckpunkte mit herkömmlichen Mitteln nur unzureichend möglich. Beispielsweise die Rauheitsmessung mit mechanischen Tastschnittgeräten oder mittels Konfokal-Mikroskopen ist nur lokal an wenigen Stellen eines solchen Werkstücks möglich und es können keine Aussagen über die Oberflächenbeschaffenheit einer längeren Strecke der Kugellaufbahn gemacht werden. Besonders schwierig ist das Messen der kritischen Welligkeit auf der Kugellaufbahn. Beim Stand der Technik wird hierfür eine Koordinatenmessmaschine eingesetzt, die bei Rotation des Kugelgewindetriebs mit einer Messkugel entlang der Laufbahn die Welligkeit misst. Fertigungstechnisch ist von Bedeutung, die Welligkeit der Kugellauffläche entlang der rechten oder der linken Flanke einer Spindel oder einer Spindelmutter getrennt voneinander zu erfassen. Dies ist bei einer Koordinatenmessmaschine systembedingt nicht möglich, da sich die Messkugel gleichzeitig auf beide Druckpunkte abstützt. Aufgrund des relativ großen Messkreises bei einer Koordinatenmessmaschine ist die Anfälligkeit für Störungen von außen groß und der Nachweis von kleinen Wellenamplituden unter 0,5 μm ist mit erheblichen Messunsicherheiten behaftet. Es wäre aber wichtig, Welligkeiten mit geringen Amplituden < 0,1 μm zu ermitteln, da hier bereits eine erhebliche Quelle für störende Geräusche gegeben ist. Außerdem ist die Anwendung einer Koordinatenmessmaschine teuer und erfordert ein kompliziertes Handling.

Die Veröffentlichung Rainer Brodmann et al: "Kenngrößen der Mikrostruktur definiert", QZ Jahrgang 53 (2008) 7, S. 46 - 49 ist nächstliegender Stand der Technik. In diesem Dokument wird auf das flächenhafte Beurteilen von Oberflächen und die winkelaufgelöste Streulichtmethode hingewiesen und diese Methode erläutert, die Basis für die vorliegende Patentanmeldung ist. Es wird ebenfalls darauf hingewiesen, dass diese Streulichtmethode beim Finishen von Zahnlenkstangen vorteilhaft zur Anwendung kommt. In diesem Dokument wird nicht erwähnt, wie in einer Einrichtungs-Betriebsart die relative Lage von Werkstück zu Sensor zu verändern und ein Anfangs-Zustand zu ermitteln ist, von dem aus in einer Mess-Betriebsart Kennwerte zur Oberflächenbeschaffenheit ermittelt werden können.

In der Unternehmensveröffentlichung optosurf: "Welligkeit auf Kugelumlaufspindeln" (http://optosurf.de/index.php?option=com_content&view=article&id=26:welligkeiten-auf-kugelumlaufspindeln&catid=12&Itemid=155&lang=de) wird darauf hingewiesen, dass es mit Hilfe eines Streulichtsensors möglich ist, Welligkeiten auf Kugelumlaufspindeln zu messen. Wie in einer Einrichtungs-Betriebsart ein Anfangs-Zustand ermittelt wird, ist in diesem Dokument nicht beschrieben. Das Dokument erwähnt eine CNC-Steuerung, die bei Rotation der Spindel ein synchrones lineares Verfahren des Sensors ermöglicht.

Der Aufsatz Kuang-Chao Fan et al: "Development of an automatic cumulative-lead error measurement system for ballscrew nuts", International Journal of Advanced Manufacturing Technology, Bd. 72, Nr. 1-4, 23. März 2013 (2013-03-23), Seiten 17-23, XP055290786 beschreibt ein Messverfahren, um eine Kugellaufbahn einer Kugelgewindespindel zu vermessen. Verwendet wird ein mechanisches Abtastsystem mit einer Messkugel, wobei eine synchronisierte Drehung und Verschiebung der Kugelgewindespindel relativ zum Abtastsystem erfolgt.

US 4 644 394 A betrifft eine Einrichtung und ein Verfahren zur Prüfung von Gewindeoberflächen. Hierzu werden Bilder des Profils der Zahnflanken und der Draufsicht auf diese Zahnflanken ausgewertet. Zur automatisierten Prüfung ist auch ein Ausgangszustand zu definieren.

Es ist Aufgabe der Erfindung, ein Verfahren und eine Einrichtung anzugeben, bei dem bzw. bei der die Oberflächenbeschaffenheit einer Kugellauffläche eines Kugelgewindetrieb-Werkstücks auf einfache Weise und mit hoher Genauigkeit ermittelt werden kann.

Diese Aufgabe wird durch ein Verfahren nach dem Anspruch 1 gelöst. Vorteilhafte Weiterbildungen sind in den abhängigen Ansprüchen angegeben.

Die Erfindung nutzt den bei der Streulichtmessmethode vorhandenen optischen Sensor für zwei Funktionen, nämlich in der Einrichtungs-Betriebsart zur Auffindung des Druckpunktes auf der Kugellaufbahn und zum anderen in einer Mess-Betriebsart zur Beurteilung der Oberflächenbeschaffenheit der Kugellaufbahn. Das vom optischen Sensor ausgesandte Strahlenbündel muss annähernd senkrecht auf die zu beurteilende Kugellaufbahn auftreffen, dies bedeutet, dass die Messachse des Sensors möglichst in Normalenrichtung auf der Kugellaufbahn steht, die mit ihrem typischerweise gotischen Profil einen Kreisabschnitt bildet. Aufgrund der bekannten Konstruktionsdaten für die Gewindespindel und gegebenenfalls auch für die Spindelmutter sind der Druckpunktwinkel und auch der Abstand vom Druckpunkt der Kugellaufbahn bis zum Sensor für eine präzise Oberflächenmessung bekannt, jedoch ist die relative Anfangsstellung zwischen Kugellaufbahn und Messachse des Sensors unbekannt und zufällig. Bei der Auswertung der Signale der Fotodetektoren des Zeilensensors wird ein Intensitäts-Kennwert ermittelt, der in enger Beziehung zu den auf die Fotodetektoren auftreffenden Intensitäten steht. Beispielsweise kann als Kennwert die Intensität des mittleren Fotodetektors des Zeilensensors oder die Summe der Intensitäten mehrerer oder aller Fotodetektoren des Zeilensensors verwendet werden.

In der Einrichtungs-Betriebsart wird eine eindeutige Position des Sensors in Bezug auf das Werkstück, z.B. die Gewindespindel, aufgefunden, die dann als Ausgangswert für die nachfolgende Vermessung der schraubenförmigen Kugellaufbahn dienen kann. Hierzu wird ausgehend von einer zufälligen Lage des Sensors an einem Abschnitt der Gewindespindel die relative Lage von Sensor zu Werkstück verändert. Der Sensor erfasst hierbei einen der genannten Intensitäts-Kennwerte. Wenn dieser Kennwert ein Maximum hat, so ist hierdurch ein Anfangs-Zustand definiert, in welchem die Messachse des Sensors den Druckpunkt auf der Kugellaufbahn und die Längsachse des Werkstücks, z.B. die Längsachse der Gewindespindel, schneidet. Beispielsweise, wenn das Werkstück bei fester Position des Sensors um einen Drehwinkel verdreht wird, so ergibt sich für einen solchen Intensitäts-Kennwert am Druckpunkt ein Maximum, d.h. die Messachse des Sensors stimmt mit der Normalen der Kugellaufbahn überein. Auf diese Weise kann in der Einrichtungs-Betriebsart ein Anfangs-Drehwinkel ermittelt werden, der einen Anfangswert für die Messgeometrie festlegt.

Eine Änderung der relativen Lage von Werkstück und Sensor zur Ermittlung des Maximums des Intensitäts-Kennwerts kann auch durch Verschieben des Werkstücks und/oder des Sensors in Richtung Längsachse des Werkstücks erfolgen. Auch eine Kombination von Verschieben und Verdrehen kann zum Auffinden des Maximums angewendet werden. Wesentlich ist, dass der zugehörige Anfangs-Zustand festgehalten wird, um als Ausgangspunkt für die nachfolgende Vermessung der schraubenförmigen Kugellaufbahn zu dienen.

In der Mess-Betriebsart wird dann das Werkstück verdreht, beispielsweise entsprechend von n Windungen der Spindel um n mal 360°. Der Sensor wird dann synchron zu diesem Drehwinkel und unter Berücksichtigung der durch den Anfangs-Zustand festgelegten Messgeometrie in Richtung parallel zur Längsachse des Werkstücks verfahren und tastet dabei fortlaufend die Kugellaufbahn ab. Die zum Sensor gehörende Steuerung berechnet dann fortlaufend einen oder mehrere Kennwerte, die die Oberflächenbeschaffenheit der Kugellaufbahn kennzeichnen. Aufgrund der winkelaufgelösten Streulicht-Messtechnik wird die Winkelverteilung der Oberfläche der fein bearbeiteten Kugellaufbahn über das rückgestreute Licht gemessen. Hieraus werden dann sowohl Kennwerte für die Struktur der Oberfläche als auch Formmerkmale wie z.B. Rundheit, Rattermarken, etc. ermittelt. Als Kenngröße zur Beurteilung der Beschaffenheit einer Oberfläche kann z.B. die Varianz der Streuwinkelverteilung Aq als Maß für die Mikrostruktur der Oberfläche verwendet werden. Zur Ermittlung der Welligkeit der Kugellaufbahn wird der weiter oben genannte Kennwert M berechnet und seine Schwankung abhängig vom Drehwinkel ausgewertet. Weitere Kenngrößen sind in der genannten VDA 2009 beschrieben.

Gemäß einem weiteren Aspekt der Erfindung wird eine Einrichtung zur berührungslosen Beurteilung der Oberflächenbeschaffenheit einer Kugellaufbahn angegeben. Die mit dieser Einrichtung erzielbaren Vorteile stimmen mit denen des zuvor beschriebenen Verfahrens überein.

Ausführungsbeispiele der Erfindung werden nachfolgend anhand der Figuren erläutert. Darin zeigt:

Figur 1      schematisch das Streulichtmessprinzip zur Messung von Querrauheit,

Figur 2      einen Kugelgewindetrieb,

Figur 3      einen Ausschnitt der Gewindespindel mit Kugel,

Figur 4      Kugellaufbahnen an Gewindeflanken,

Figur 5      die Anordnung des Sensors in Bezug zur Gewindespindel,

Figur 6      verschiedene Sequenzen A, B, C in der Einrichtungs-Betriebsart

Figur 7      ein Ausführungsbeispiel mit zwei Sensoren, und

Figur 8      ein Diagramm mit Messwerten an Kugellaufbahnen.

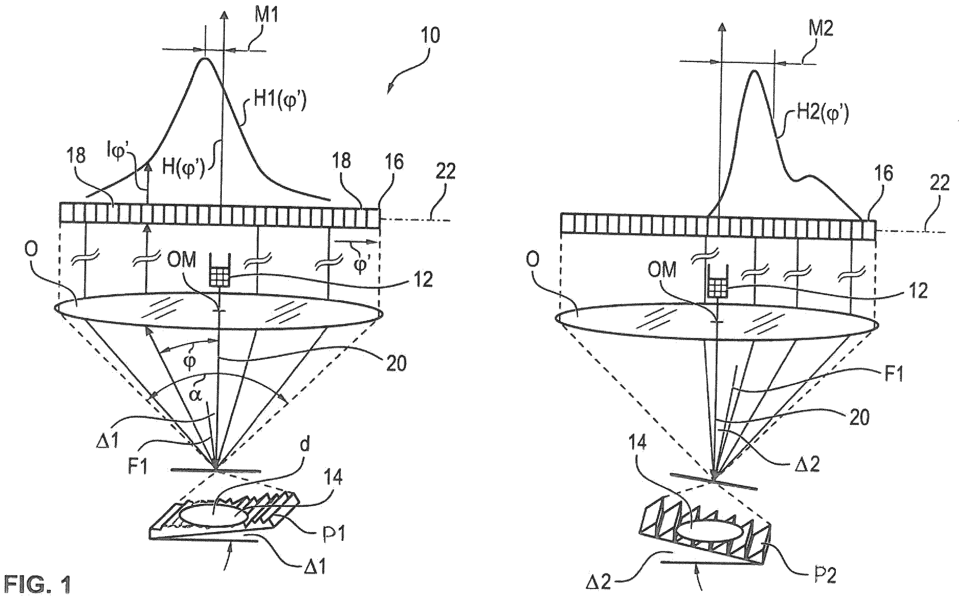

Figur 1 zeigt schematisch das Messprinzip, wie dies beispielsweise auch in der weiter oben erwähnten Richtlinie VDA 2009 beschrieben ist. Ein optischer Sensor 10 für die winkelaufgelöste Streulichtmessung umfasst als Lichtquelle 12 eine LED oder einen Halbleiterlaser, der die Oberfläche P1 einer Probe mit einem Strahlenbündel definierter Geometrie und Intensitätsverteilung beleuchtet. Das Strahlenbündel erzeugt auf der Oberfläche einen Messfleck 14, der in etwa kreisrund mit Durchmesser d ist. Das von der Mikrostruktur der Oberfläche P1 rückgestreute Licht wird innerhalb des maximalen messbaren Streuwinkelbereichs $\alpha$ von einem

Messobjektiv O erfasst. Ein Zeilensensor 16 umfassend eine diskrete Anzahl von Fotodetektoren 18 (nur zwei Fotodetektoren sind bezeichnet) ist so angeordnet, dass die einzelnen Fotodetektoren 18 zu den diskreten Streuwinkelwerten $\varphi$ die entsprechenden Intensitätswerte I$\varphi$' in elektrische Signale abwandeln, die als Digitalwerte weiterverarbeitet werden.

Das Messobjektiv O ist als Fourier-Optik oder f-Theta-Optik ausgebildet und transformiert die Streuwinkel $\varphi$ in einen Weg $\varphi$', der der Position i der einzelnen Fotodetektoren 18 entlang des Zeilensensors 16 entspricht. Somit erhält man entlang der Anordnung der Fotodetektoren 18 mit Intensitäten I$\varphi$' eine Verteilung H1($\varphi$'). Aus dieser Intensitätsverteilung H1($\varphi$') kann durch Normierung die Streuwinkelverteilung H($\varphi$') der Mikrostruktur im Messfleck 14 berechnet werden.

Die Ausrichtung des Sensors 10 mit seiner Messachse 20 ist generell senkrecht zu der zu messenden Oberfläche P1. In diesem Falle stimmen die Flächennormale F1 der Oberfläche P1 und die Messachse 20 überein. Wenn die Flächennormale F1 um einen Winkel $\Delta$1 gegenüber der Messachse 20 in Richtung der Längsachse 22 des Zeilensensors 16 verkippt ist, so verschiebt sich die Intensitätsverteilung H1($\varphi$') um einen Wert M1 gegenüber der mittleren Lage der Intensitätsverteilung. Diese Verschiebung M1 kann genützt werden, um beispielsweise Welligkeiten oder Unrundheiten der Oberfläche P1 zu bestimmen. Der Wert M1 entspricht dem ersten statistischen Moment der Streuwinkel-Verteilungskurve H1($\varphi$') mit $\varphi$' = tan($\varphi$) und damit dem Schwerpunkt dieser Verteilungskurve H1($\varphi$').

Als erstes statistisches Moment einer Verteilungskurve H($\varphi$') berechnet sich M allgemein zu

$$M = \Sigma \varphi' \cdot H(\varphi')$$

mit

$$H(\varphi') = I(\varphi')/\Sigma I(\varphi').$$

Bezogen auf die diskreten Fotodetektoren i berechnet sich M zu

$$M = \sum_{i=1}^{n}(\varphi'i) \cdot Ii / \sum_{i=1}^{n} Ii \, ,$$

worin

     i die Laufvariable von 1 bis n,
     n die maximale Anzahl von Fotodetektoren,
     Ii die gemessene Intensität des Fotodetektors i und
     $\varphi$'i der dem Fotodetektor i zugeordnete Streuwinkel ist.

Die Bezeichnung $\sum_{i=1}^{n} li$ kennzeichnet die Gesamtintensität Ig, die auf die Fotodetektoren 18 des Zeilendetektors fällt. Diese Gesamtintensität Ig, die als Nebenprodukt bei der Berechnung von M auftritt, wird als Intensitäts-Kennwert in der Einrichtungs-Betriebsart verwendet, wie weiter unten näher erläutert wird.

Bei der Berechnung von M wird eine Normierung durchgeführt, was bedeutet, dass der Kennwert M unabhängig vom Reflexionsvermögen der Oberfläche des Werkstücks ist. Anhand des Kennwerts M kann auch eine Feinjustierung des Sensors in Bezug auf eine Flächennormale der zu messenden Fläche erfolgen.

Im linken Bildteil der Figur 1 hat die Oberfläche P1 ein stochastisches Schleifprofil. Im Bildteil rechts hat eine weitere Oberfläche P2 ein asymmetrisches Drehprofil. Entsprechend ergibt sich ein Verlauf der Intensitätsverteilung H2($\varphi$') und infolge eines Verkippwinkels $\Delta$2 der Flächennormale F1 der Oberfläche P2 gegenüber der Messachse 20 in Richtung der Längsachse 22 des Zeilensensors 16 eine Verschiebung der Streulichtverteilung H2($\varphi$') um M2.

Typische Werte für den Sensor 10 sind für den Durchmesser d des Messflecks 14 etwa 0,03 bis 0,9 mm. Der Öffnungswinkel $\alpha$ des Objektivs O ist zum Beispiel 32°. Eine entsprechende Anzahl von Fotodetektoren 18 ist so gewählt, dass sich eine Auflösung für $\varphi$' von 1° ergibt. Die Anzahl der Messung und Berechnung von Kennwerten ist größer als 1000/Sekunde.

Beim winkelaufgelösten Streulichtverfahren ist ein Vorteil die Unempfindlichkeit gegenüber Abstandsänderungen, die an ebenen Flächen bis zu 2 mm betragen kann.

Ein optischer Mittelpunkt OM des Sensors 10 liegt auf der Messachse 20 im Bereich der Mitte des Objektivs O. Um den Sensor 10 in Normalenrichtung zur Fläche P1, P2 auszurichten, wird er um den Mittelpunkt OM geschwenkt, bis der Kennwert M annähernd 0 oder minimal ist. Aus der Intensitätsverteilung H1($\varphi$') kann eine Vielzahl von Kenngrößen ermittelt werden (siehe hierzu VDA 2009), so z.B. die Varianz der Streuwinkelverteilung Aq als Maß für die Mikrostruktur der Oberfläche den Kennwert Aq* als Defekterkennungssignal, die Schiefe der Streuwinkelverteilung Ask als Maß für die Profilschiefe der Mikrostruktur und zahlreiche weitere Einzelkenngrößen und Mehrfachkenngrößen.

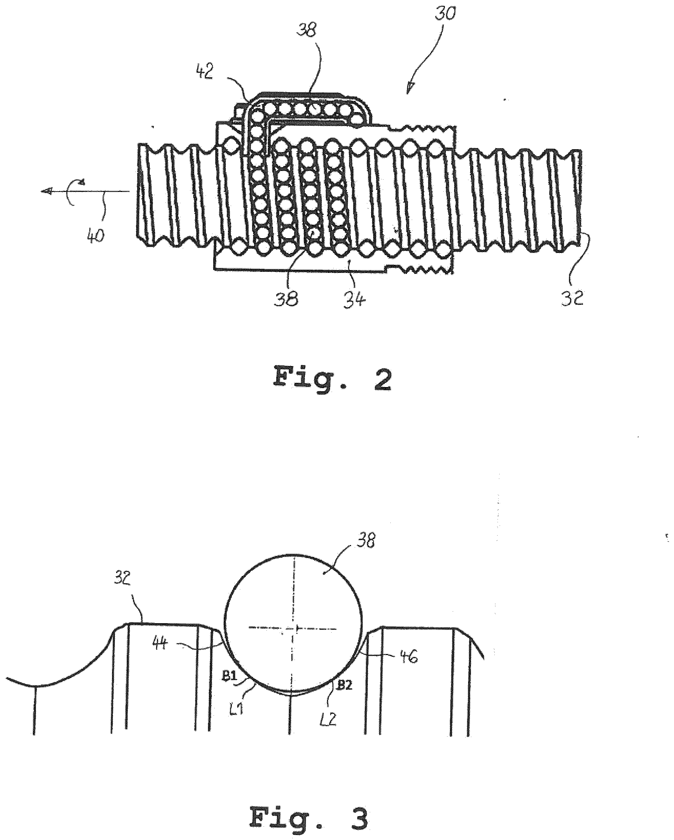

Die vorliegende Erfindung wird zur Beurteilung der Oberflächenbeschaffenheit eines Kugelgewindetriebs 30 genutzt, der in Figur 2 dargestellt ist. Dieser Kugelgewindetrieb 30 umfasst eine Gewindespindel 32 und eine Spindelmutter 34, an der meist ein zu bewegendes Teil, z.B. eine Lenkstange eines Automobils befestigt ist. Zwischen Gewindespindel 32 und Spindelmutter 34 bewegen sich auf Kugellaufbahnen Kugeln 38, die beim Drehen der Gewindespindel 32 in axialer Richtung einer Längsache 40 der Gewindespindel 32 wandern. In einem Rückführkanal 42 der Spindelmutter 34 werden die Kugeln 38 wieder zurückgeführt und es wird damit ein Kreislauf geschlossen, in welchem die Kugeln 38 zirkulieren.

Figur 3 zeigt in einer vergrößerten Darstellung einen Ausschnitt der Gewindespindel 32 im Zusammenwirken mit der Kugel 38. Die in einem Gewindegang umlaufende Kugel 38 berührt im Idealfall beide Flanken 44, 46 an je einem Punkt, die als Druckpunkte B1, B2 bzw. Kontaktpunkte bezeichnet werden. Die Druckpunkte B1, B2 liegen auf Kugellaufbahnen L1, L2, die bei dem üblichen Profil als gotischer Bogen im Querschnitt Kreisbogenabschnitte bilden.

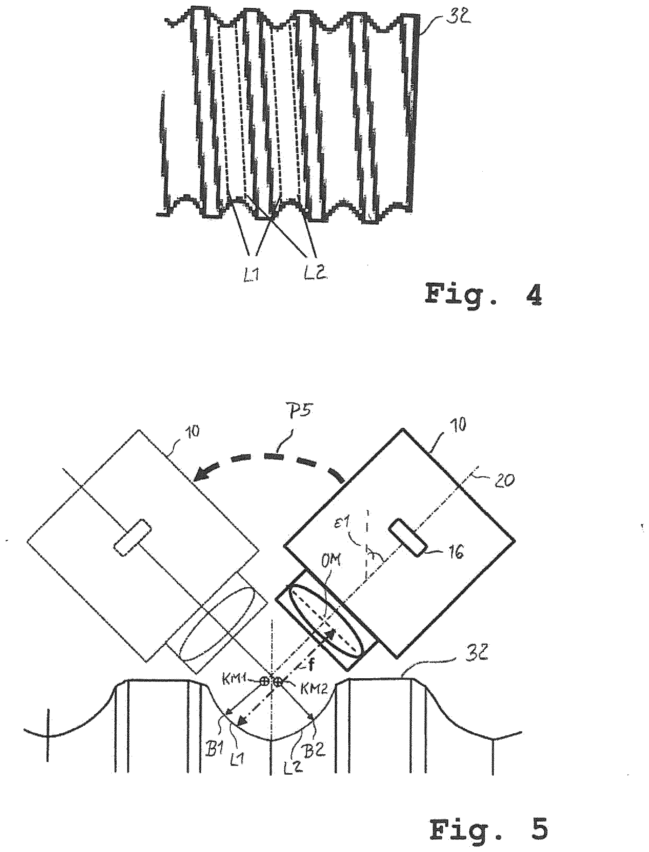

Figur 4 zeigt die Mittellinien der linken Kugellaufbahn L1 und der rechten Kugellaufbahn L2 innerhalb zweier Gewindegänge der Gewindespindel 32. Diese Kugellaufbahnen L1, L2 verlaufen schraubenförmig entlang der Gewindespindel 32.

Figur 5 zeigt schematisch die Anordnung des optischen Sensors 10 (dick ausgezogene Striche) zur Beurteilung der Oberflächenbeschaffenheit der linken Kugellaufbahn L1. Die Messachse 20 des Sensors 10 wird von einer Positioniervorrichtung (in Figur 5 nicht dargestellt), die weiter unten näher beschrieben wird, so angeordnet, dass sie durch den Kreismittelpunkt KM1 des gotischen Bogen der Kugellaufbahn L1 geht. Zu diesem Kreismittelpunkt KM1 gehört ein vorbestimmter Druckpunktwinkel $\varepsilon$1, der aus den Konstruktionsdaten für die Gewindespindel 32 bekannt ist. Außerdem wird der Sensor 10 so angeordnet, dass sein Abstand zwischen dem Druckpunkt B1 und dem optischen Mittelpunkt OM gleich der Brennweite f des Objektivs O ist. Bei dieser Geometrie wird die von der Kugellaufbahn L1 rückgestreute Strahlung optimal zum Zeilensensor 16 reflektiert.

Mit Hilfe der Positioniervorrichtung wird der Abstand f zwischen Mittelpunkt OM des Sensors 10 und der Kugellauffläche L1 eingestellt. Wenn die Messachse 20 senkrecht auf dem Druckpunkt B1 der Kugellaufbahn L1 steht, so kann durch Verschwenken des Sensors 10 um 90° (gestrichelt gezeichnet) gemäß Pfeil P5 die Kugellauffläche L2 der anderen Flanke gemessen werden, wobei auch eine axiale Verschiebung erfolgt, derart, dass die Messachse 20 durch den Kreismittelpunkt KM2 für die Kugellaufbahn L2 geht. Es genügt also, den Sensor 10 einmal genau auf eine der Kugellaufflächen L1, L2 auszurichten.

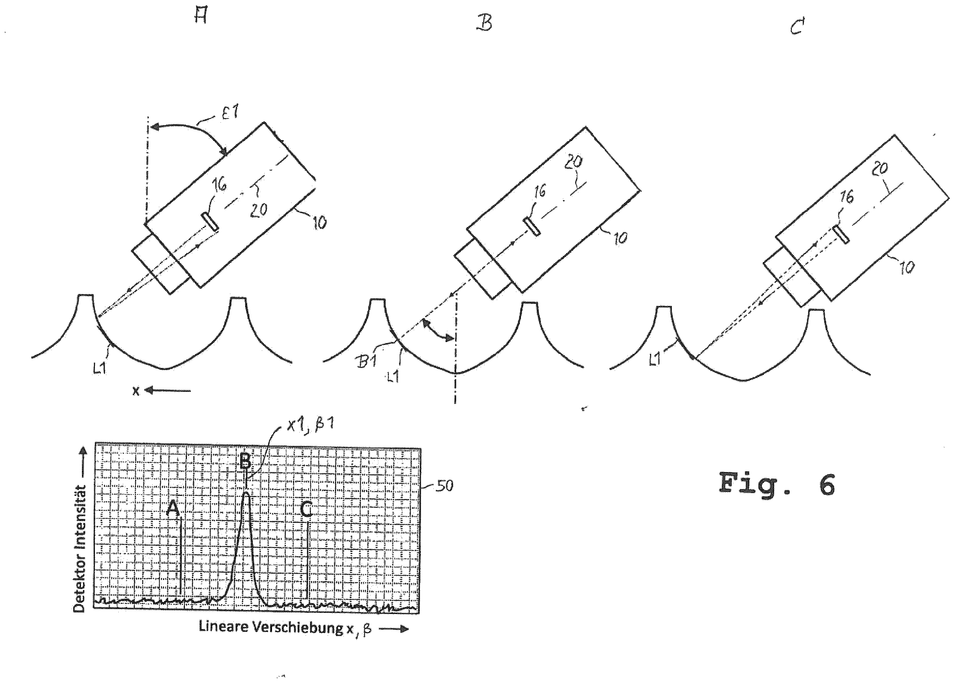

Figur 6 zeigt in einer Sequenz A, B, C die Vorgehensweise in der Einrichtungs-Betriebsart, bei der ein Anfangs-Zustand für die Lagebeziehung von Sensor 10 und Gewindespindel 32 aufgefunden wird, bei der die Messachse 20 des Sensors 10 senkrecht auf der Kugellauffläche L1 steht. Zunächst wird in einem Zustand A der Sensor mit seiner Messachse 20 so ausgerichtet, dass der Winkel zwischen Messachse 20 und der Normalen zur Längsachse 40 der Gewindespindel 32 den durch die Flankengeometrie der Kugelspindel 32 definierten Druckpunktwinkel $\varepsilon$1 hat. Z.B. ist dieser Druckpunktwinkel 41°. Weiterhin wird der Sensor 10 mit Hilfe der Positioniervorrichtung so eingestellt, dass er den vorgegeben Abstand zu einem Druckpunkt der Kugellauffläche L1 hat, typischerweise die Brennweite f des Objektivs O. Der Sensor 10 wird in dieser Lage fixiert und die Gewindespindel 32 um einen Weg x verschoben. Gleichzeitig wird die zurückreflektierte Intensität mit Hilfe der Fotodetektoren 18 detektiert und ein Intensitäts-Kennwert ermittelt. Beispielsweise wird die weiter oben genannte Gesamtintensität Ig berechnet. Wie im Zustand A zu erkennen ist, trifft das in Richtung der Messachse 20 ausgesendete und von außerhalb der Kugellaufbahn L1 reflektierte Licht nicht auf den Zeilensensor 16, so dass ein Intensitäts-Kennwert einen niedrigen Wert hat, wie dies im Diagramm 50 zu sehen ist.

Im Zustand B hat sich die Kugellauffläche L1 in Richtung x so weiter bewegt, dass sie sich im Erfassungsbereich des Zeilensensors 16 befindet und die Messachse 20 den Druckpunkt B1 schneidet.

Im Zustand C hat sich die Lauffläche L1 in x-Richtung weiterbewegt und verlässt den Erfassungsbereich des Zeilensensors 16.

Im Diagramm 50 ist der Intensitäts-Kennwert über die lineare Verschiebung x der Kugellaufbahn L1 aufgetragen. Es ist zu erkennen, dass im Zustand A der Kennwert einen niedrigen Wert hat. Im Zustand B liegt ein Maximalwert vor. Im Zustand C ist der Kennwert wieder abgefallen. Die zum Maximalwert des Intensitäts-Kennwerts im Zustand B gehörende Anfangs-Verschiebung x1 wird festgehalten. Damit ist die richtige Ausrichtung des Sensors 10 in Bezug auf die Kugellauffläche L1 bekannt. Unter Berücksichtigung dieser Anfangs-Position x1 wird sodann die Gewindespindel 32 um einen Drehwinkel $\beta = n \cdot 360°$ (n ist die Anzahl der Gewindegänge) verdreht und der Sensor 10 durch die Positioniervorrichtung in x-Richtung parallel zur Längsachse 40 der Gewindespindel 32 in Synchronität mit dem Drehwinkel $\beta$ verfahren, wobei die Kugellauffläche L1 vollständig oder zumindest abschnittweise abgetastet wird. Eine Computersteuerung ermittelt aus den gemessenen Signalen der Fotodetektoren 18 sodann die Kennwerte über die Oberflächenbeschaffenheit der Kugellaufbahn L1. Die Kugellauffläche L2 der anderen Flanke kann dann durch Verschwenken des Sensors 10 um 90° und geringe axiale Verschiebung vermessen werden.

Die Kugellaufbahn L1 ist als gotischer Bogen ein Kreisabschnitt. Durch Verschwenken des Sensors 10 um seinen optischen Mittelpunkt OM um wenige Winkelgrade ausgehend vom Druckpunktwinkel $\varepsilon1$, kann die Oberflächenbeschaffenheit auch in zum Druckpunkt B1 bzw. B2 benachbarten Punkten ermittelt werden.

Beim beschriebenen Beispiel wurde die Gewindespindel 32 in x-Richtung axial verschoben. Es ist auch möglich, den Sensor 10 in x-Richtung zu verschieben, um den Anfangs-Zustand zu ermitteln. Alternativ kann auch die Gewindespindel 32 um einen Winkel $\beta$ verdreht werden, wobei die Kugellaufbahn L1 sich relativ zur Messachse 20 des Sensors 10 in axialer Richtung bewegt. Bei einem Winkel $\beta1$ ist dann der Anfangs-Zustand erreicht, in welchem der Intensitäts-Kennwert sein Maximum hat. Im Diagramm ist der Drehwinkel $\beta$ als Variable und der Drehwinkel $\beta1$ für den Anfangs-Zustand eingetragen. Da es wesentlich ist, die relative Lagebeziehung zwischen Gewindespindel 32 und Sensor 10 zu verändern, kann auch eine kombinierte Änderung von axialer Verschiebung von Sensor und/oder Gewindespindel 32 und/oder eine zusätzliche Verdrehung der Gewindespindel 32 angewendet werden, um den definierten Anfangs-Zustand zu ermitteln.

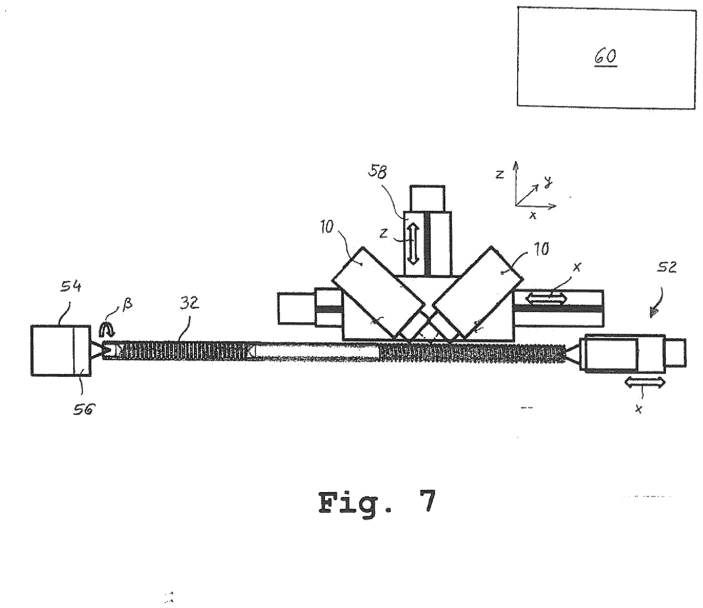

Figur 7 zeigt ein Ausführungsbeispiel, bei dem zwei gleichartige optische Sensoren 10 gleichzeitig zum Einsatz kommen. Die Gewindespindel 32 ist in einer Spannvorrichtung in Form eines CNC-gesteuerten Präzisionsreitstocks 52 eingespannt. Dieser Präzisionsreitstock 52 kann in x-Richtung verschoben werden, um gemäß Figur 6 in der Einrichtungs-Betriebsart die Anfangsposition x1 einzustellen. Mit Hilfe einer motorisch angetriebenen Präzisionsspindel 54, umfassend einen Drehwinkelsensor 56, wird für den Messvorgang die Gewindespindel 32 in Drehbewegung versetzt. Die beiden Sensoren 10, 10 sind gegeneinander um 90° verschwenkt und messen gleichzeitig die linke Kugellaufbahn L1 und die rechte Kugellaufbahn L2. Vorteilhaft ist es, wenn die beiden Sensoren 10, 10 gegeneinander um mehrere Gewindegänge versetzt sind, um genügend Messraum zu haben. Eine Positioniervorrichtung 58 kann die Sensoren 10, 10 in mehreren Achsen verstellen, z.B. in x-, y-, z-Richtung und um verschiedene Drehachsen verdrehen. Eine computergestützte Steuerung 60 steuert den Präzisionsreitstock 52 und die Positioniervorrichtung 58 und übernimmt die Auswertung der Signale des jeweiligen Sensors 10.

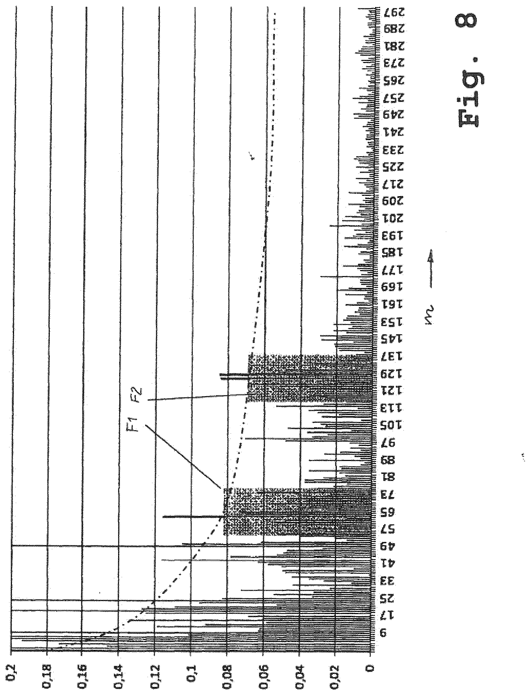

Figur 8 zeigt in einem Diagramm eine Auswertung der mit Hilfe der Sensors 10 an Laufbahnen L1, L2 ermittelten Welligkeit. Auf der Ordinate sind die mittels einer Fast-Fourier-Transformation ermittelten Wellenamplituden in $\mu$m über die Ordnungen m von Oberwellen aufgetragen. Besonders kritisch sind zwei Überwachungsfenster F1 und F2. Hohe Amplituden in diesen Fenstern F1, F2 führen zu unerwünschten Geräuschen und zu erhöhtem Verschleiß des Kugelgewindetriebs. Das Diagramm zeigt die hohe Leistungsfähigkeit der angewandten Streulichtmesstechnik mit extrem hoher Auflösung bis zu Amplituden von 0,02 $\mu$m und der Möglichkeit entlang der gesamten Kugellaufbahn Messungen mit hoher Messgeschwindigkeit ausführen zu können.

Beschrieben wurde insbesondere die Messung in außen liegenden Gewindegängen der Kugelspindel. Es ist auch möglich, Messungen in innenliegenden Gewindegängen der Spindelmutter durchzuführen, was aufgrund des beengten Raumes technisch schwieriger ist. Hier kann durch einen Spiegelaufsatz, wie dies in der weiter oben erwähnten Patentanmeldung DE 10 2014 116 966.2 beschrieben ist, Zugang zu den zu messenden Kugellaufbahnen ermöglicht werden.

Bezugszeichenliste

| 10 | Sensor |
| 12 | Lichtquelle |
| 14 | Messfleck |
| d | Durchmesser des Messflecks |
| P1 | Oberfläche |
| $\alpha$ | maximal messbarer Streuwinkelbereich |
| O | Messobjektiv |
| 16 | Zeilensensor |
| 18 | Fotodetektoren |
| $\varphi$ | Streuwinkelwerte |
| $I\varphi'$ | Intensitätswerte |
| $H1(\varphi')$ | Intensitätsverteilung |
| $H(\varphi')$ | Streuwinkelverteilung |
| F1 | Flächennormale |
| 20 | Messachse |
| $\Delta 1$ | Winkel |
| 22 | Längsachse des Zeilensensors |
| M1 | Verschiebung gegenüber der mittleren Lage der Intensitätsverteilung |
| P2 | Oberfläche |
| $H2(\varphi')$ | Intensitätsverteilung |
| $\Delta 2$ | Verkippwinkel |
| M2 | Verschiebung |
| Aq | Varianz der Streuwinkelverteilung; Rauheitswert |
| Ask | Profilschiefe der Mikrostruktur |
| Aq* | Defekterkennungssignal |
| I | Laufvariable |
| Ii | gemessene Intensität des Fotodetektors i |
| Ig | Gesamtintensität, Intensitäts-Kennwert |
| OM | Optischer Mittelpunkt des Sensors |
| 30 | Kugelgewindetrieb |
| 32 | Gewindespindel |
| 34 | Spindelmutter |
| 38 | Kugeln |
| 40 | Längsachse |
| 42 | Rückführkanal |
| 44, 46 | Flanken |
| B1, B2 | Druckpunkte |
| L1, L2 | Kugellaufbahnen |
| KM1, KM2 | Kreismittelpunkte |
| f | Brennweite des Objektivs |
| P5 | Pfeil |
| $\varepsilon 1$ | Druckpunktwinkel |
| x, y, z | Achsen |
| 50 | Diagramm |
| X1 | Anfangs-Verschiebung |
| $\beta 1$ | Anfangs-Winkel |
| 52 | Präzisionsreitstock |
| 54 | Präzisionsspindel |
| 56 | Drehwinkelsensor |
| 58 | Positioniervorrichtung |
| 60 | Steuerung |
| m | Ordnung von Oberwellen |
| F1, F2 | Fenster |

**Patentansprüche**

1. Verfahren zur berührungslosen Beurteilung der Oberflächenbeschaffenheit einer Kugellaufbahn (L1, L2) eines Kugelgewindetrieb-Werkstücks (30) nach der winkelaufgelösten Streulichtmesstechnik, bei dem ein optischer Sensor (10) ein Strahlenbündel (24) mit definierter Intensitätsverteilung auf die zu beurteilende Kugellaufbahn (L1, L2) des Werkstücks (30) aussendet und einen Messfleck (14) beleuchtet,

die zurückreflektierte Intensität ($I_i$) der Strahlung mittels eines Zeilensensors (16) mit einer diskreten Anzahl (i) von Fotodetektoren (18) in einem definierten Winkelbereich ($\alpha$) detektiert und daraus mindestens ein Intensitäts-Kennwert (Ig) ermittelt wird,

das Werkstück (30, 32) drehbar in einer Spannvorrichtung (52) gelagert und der Drehwinkel ($\beta$) von einem Drehwinkelsensor (56) erfasst wird,

der Sensor (10) relativ zum Werkstück so ausgerichtet wird, dass seine Messachse (20) in einem Druckpunkt (B1, B2) die Kugellaufbahn (L1, L2) und die Normale zur Längsachse (40) des Werkstücks (30, 32) unter einem vorgegebenen Druckpunktwinkel ($\varepsilon 1$) schneidet und dabei einen vorgegebenen Abstand zu dem Druckpunkt (B1, B2) hat,

wobei der Druckpunktwinkel ($\varepsilon 1$) dem Winkel entspricht, bei dem die Messachse (20) des Sensors (10) senkrecht auf der Kugellaufbahn (L1) steht,

in einer Einrichtungs-Betriebsart die relative Lage von Werkstück (30, 32) zu Sensor (10) verändert wird und ein Anfangs-Zustand (x1, $\beta 1$) ermittelt wird, bei dem der Intensitäts-Kennwert (Ig) ein Maximum hat,

danach in einer Mess-Betriebsart bei fester Position des Sensors (10) das Werkstück (30, 32) verdreht wird, wobei der Sensor (10) ausgehend vom ermittelten Anfangs-Zustand (x1, $\beta 1$) in Synchronität mit dem Drehwinkel ($\beta$) in Richtung (x) parallel zur Längsachse (40) des Werkstücks (30) verfahren wird und dabei die Kugellaufbahn (L1, L2) abtastet, wobei eine Steuerung (60) mindestens einen Kennwert (Aq; Aq*, M) zur Oberflächenbeschaffenheit berechnet,

wobei in der genannten Einrichtungs-Betriebsart das Werkstück (32) relativ zur Position des Sensors (10) verdreht wird und als Anfangszustand ein Anfangs-Drehwinkel ($\beta 1$) ermittelt wird, bei dem der Intensitäts-Kennwert (Ig) ein Maximum hat,

und/oder in dieser Einrichtungs-Betriebsart das Werkstück (32) relativ zur Position des Sensors (10) in Richtung (x) der Längsachse verschoben wird und als Anfangszustand eine Anfangs-Position (x1) ermittelt wird, bei der der Intensitäts-Kennwert (Ig) ein Maximum hat,

wobei in dieser Einrichtungs-Betriebsart als Intensitäts-Kennwert (Ig) mindestens die Intensität des mittleren Fotodetektors (18) des Zeilensensors (16) verwendet wird.

**2.** Verfahren nach Anspruch 1, bei dem in der Einrichtungs-Betriebsart als Intensitäts-Kennwert (Ig) die Summe der Intensitäten mehrerer oder aller Fotodetektoren (18) des Zeilensensors (16) ermittelt wird.

**3.** Verfahren nach einem der vorhergehenden Ansprüche, bei dem der Sensor (10) in einer Positionier-Vorrichtung (58) parallel zur Längsachse des Werkstücks (32) und/oder senkrecht hierzu verschiebbar und/oder um mindestens eine Drehachse verdrehbar gelagert wird, um verschiedene Prüfpositionen einzustellen.

**4.** Verfahren nach einem der vorhergehenden Ansprüche, bei dem der Sensor (10) um seine Messachse (20) drehbar gelagert wird, um Kennwerte für Querrauheit und Längsrauheit zu ermitteln.

**5.** Verfahren nach einem der vorhergehenden Ansprüche, bei dem der Sensor (10) mit seiner Messachse (20) um den Druckpunktwinkel ($\varepsilon$1) verschwenkbar ist, um Kennwerte zur Oberflächenbeschaffenheit entlang mehrerer benachbarter Messlinien auf der Kugellaufbahn (L1, L2) zu ermitteln.

**6.** Verfahren nach einem der vorhergehenden Ansprüche, bei dem in der Mess-Betriebsart als Kennwert die Längsrauheit und/oder die Querrauheit und/oder die Welligkeit mittels der computergestützten Steuerung (60) berechnet wird.

**7.** Einrichtung zur berührungslosen Beurteilung der Oberflächenbeschaffenheit einer Kugellaufbahn (L1, L2) eines Kugelgewindetrieb-Werkstücks (30) nach der winkelaufgelösten Streulichtmesstechnik, umfassend einen optischen Sensor (10), einen Zeilensensor (16) mit einer diskreten Anzahl (i) von Fotodetektoren (18), eine Spannvorrichtung (52), eine Positioniervorrichtung (58), einem Antrieb (54) und eine Steuerung (60),
bei der der optische Sensor (10) ein Strahlenbündel (24) mit definierter Intensitätsverteilung auf die zu beurteilende Kugellaufbahn (L1, L2) des Werkstücks (30) aussendet und einen Messfleck (14) beleuchtet, die zurückreflektierte Intensität ($I_i$) der Strahlung mittels des Zeilensensors (16) mit der diskreten Anzahl (i) von Fotodetektoren (18) in einem definierten Winkelbereich ($\alpha$) detektiert und die Steuerung (60) dazu eingerichtet ist, daraus mindestens einen Intensitäts-Kennwert (Ig) zu ermitteln,
die Spannvorrichtung (52) eingerichtet ist, um das Werkstück (30, 32) drehbar zu lagern und der Drehwinkelsensor (56) eingerichtet ist, um einen Drehwinkel ($\beta$) zu erfassen,
die Steuerung (60) eingerichtet ist, um den Sensor (10) mittels der Positionierungsvorrichtung (58) relativ zum Werkstück so auszurichten, dass seine Messachse (20) in einem Druckpunkt (B1, B2) die Kugellaufbahn (L1, L2) und die Normale zur Längsachse (40) des Werkstücks (30, 32) unter einem vorgegebenen Druckpunktwinkel ($\varepsilon$1) schneidet und dabei einen vorgegebenen Abstand zu dem Druckpunkt (B1, B2) hat, wobei der Druckpunktwinkel ($\varepsilon$1) dem Winkel entspricht, bei dem die Messachse (20) des Sensors (10) senkrecht auf der Kugellaufbahn (L1) steht,
in einer Einrichtungs-Betriebsart die relative Lage von Werkstück (30, 32) zu Sensor (10) zu verändern und einen Anfangs-Zustand (x1, $\beta$1) zu ermitteln, bei dem der Intensitäts-Kennwert (Ig) ein Maximum hat, danach in einer Mess-Betriebsart bei fester Position des Sensors (10) mittels des Antriebs (54) das Werkstück (30, 32) zu verdrehen, wobei die Steuerung (60) eingerichtet ist, um den Sensor (10) ausgehend vom ermittelten Anfangs-Zustand (x1, $\beta$1) in Synchronität mit dem Drehwinkel ($\beta$) in Richtung (x) parallel zur Längsachse (40) des Werkstücks (30) durch die Positionierungsvorrichtung (58) zu verfahren und dabei die Kugellaufbahn (L1, L2) abzutasten, wobei die Steuerung (60) mindestens einen Kennwert (Aq; Aq*, M) zur Oberflächenbeschaffenheit berechnet,
wobei in der genannten Einrichtungs-Betriebsart die Steuerung (60) eingerichtet ist, um das Werkstück (32) relativ zur Position des Sensors (10) zu verdrehen und als Anfangszustand einen Anfangs-Drehwinkel ($\beta$1) zu ermitteln, bei dem der Intensitäts-Kennwert (Ig) ein Maximum hat,
und/oder in dieser genannten Einrichtungs-Betriebsart die Steuerung (60) eingerichtet ist, um das Werkstück (32) relativ zur Position des Sensors (10) in Richtung (x) der Längsachse zu verschieben und als Anfangszustand eine Anfangs-Position (x1) zu ermitteln, bei der der Intensitäts-Kennwert (Ig) ein Maximum hat,
wobei in dieser Einrichtungs-Betriebsart als Intensitäts-Kennwert (Ig) mindestens die Intensität des mittleren Fotodetektors (18) des Zeilensensors (16) verwendet wird.

**8.** Einrichtung nach einem der vorhergehenden Ansprüche, bei der in der Einrichtungsbetriebsart als Intensitäts-Kennwert (Ig) die Summe der Intensitäten mehrerer oder aller Fotodetektoren (18) des Zeilensensors (16) ermittelt wird.

**9.** Einrichtung nach einem der vorhergehenden Ansprüche, bei dem der Sensor (10) in der Positionier-Vorrichtung (58) parallel zur Längsachse des Werkstücks (32) und/oder senkrecht hierzu verschiebbar und/oder um mindestens eine Drehachse verdrehbar gelagert wird, um verschiedene Prüfpositionen einzustellen.

**10.** Einrichtung nach einem der vorhergehenden Ansprüche, bei der zwei gleichartige Sensoren (10) in der Positioniervorrichtung so gelagert sind, dass sie gleichzeitig beide Kugellaufbahnen (L1, L2) in Gewindegängen des Werkstücks (32) vermessen.

**11.** Einrichtung nach einem der vorhergehenden Ansprüche, bei der der Sensor (10) mit seiner Messachse (20) um den Druckpunktwinkel (ε1) verschwenkbar ist, um Kennwerte zur Oberflächenbeschaffenheit entlang mehrerer benachbarter Messlinien auf der Kugellaufbahn (L1, L2) zu ermitteln.

**Claims**

**1.** A method for the contactless assessment of the surface quality of a ball track (L1, L2) of a ball screw drive workpiece (30) according to the angle-resolved scattered light measuring technique,
in which an optical sensor (10) emits a beam of rays (24) with defined intensity distribution onto the ball track (L1, L2) of the workpiece (30), which ball track is to be assessed, and illuminates a measuring spot (14),
the reflected intensity ($I_i$) of the radiation is detected by a line sensor (16) with a discrete number (i) of photodetectors (18) in a defined angular range (α), and at least one intensity characteristic value (Ig) is determined therefrom,
the workpiece (30, 32) is rotatably mounted in a clamping device (52) and the angle of rotation (β) is detected by an angle-of-rotation sensor (56),
the sensor (10) is oriented relative to the workpiece such that its measuring axis (20) intersects in a pressure point (B1, B2) the ball track (L1, L2) and the normal to the longitudinal axis (40) of the workpiece (30, 32) at a predetermined pressure point angle (ε1) and in doing so has a predetermined distance to the pressure point (B1, B2),
wherein the pressure point angle (ε1) corresponds to the angle at which the measuring axis (20) of the sensor (10) is perpendicular to the ball track (L1), in a setting mode, the relative position of the workpiece (30, 32) to the sensor (10) is changed and an initial state (x1, β1) is determined in which the intensity characteristic value (Ig) has a maximum,
subsequently, in a measuring mode, given a fixed position of the sensor (10), the workpiece (30, 32) is rotated, wherein the sensor (10) starting from the determined initial state (x1, β1) is moved in synchrony with the angle of rotation (β) in the direction (x) parallel to the longitudinal axis (40) of the workpiece (30) and in doing so scans the ball track (L1, L2), wherein a control (60) calculates at least one characteristic value (Aq; Aq*, M) regarding the surface quality,
wherein in said setting mode, the workpiece (32) is rotated relative to the position of the sensor (10) and as an initial state an initial angle of rotation (β1) is determined at which the intensity characteristic value (Ig) has a maximum,
and/or in this setting mode, the workpiece (32) is displaced relative to the position of the sensor (10) in the direction (x) of the longitudinal axis and as an initial state an initial position (x1) is determined at which the intensity characteristic value (Ig) has a maximum,
wherein in this setting mode, at least the intensity of the medium photodetector (18) of the line sensor (16) is used as an intensity characteristic value (Ig).

**2.** The method according to claim 1, in which in the setting mode, the sum of the intensities of several or all photodetectors (18) of the line sensor (16) is determined as an intensity characteristic value (Ig).

**3.** The method according to one of the preceding claims, in which the sensor (10) is mounted in a positioning device (58) movably parallel to the longitudinal axis of the workpiece (32) and/or perpendicularly thereto and/or rotatably about at least one axis of rotation to adjust various test positions.

**4.** The method according to one of the preceding claims, in which the sensor (10) is rotatably mounted about its measuring axis (20) to determine characteristic values for cross roughness and longitudinal roughness.

**5.** The method according to one of the preceding claims, in which the sensor (10) with its measuring axis (20) is pivotable about the pressure point angle (ε1) in order to determine characteristic values regarding the surface quality along several adjacent measuring lines on the ball track (L1, L2).

**6.** The method according to one of the preceding claims, in which in the measuring mode, the longitudinal roughness and/or the cross roughness and/or the waviness is calculated as a characteristic value by means of the computer-aided control (60).

**7.** A device for the contactless assessment of the surface quality of a ball track (L1, L2) of a ball screw drive workpiece (30) according to the angle-resolved scattered light measuring technique, comprising an optical sensor (10), a line sensor (16) with a discrete number (i) of photodetectors (18), a clamping device (52), a positioning device (58), a drive (54) and a control (60),
in which the optical sensor (10) emits a beam of rays (24) with defined intensity distribution onto the ball track (L1, L2) of the workpiece (30), which ball track is to be assessed, and illuminates a measuring spot (14),

the reflected intensity ($I_i$) of the radiation is detected by means of the line sensor (16) with the discrete number (i) of photodetectors (18) in a defined angular range ($\alpha$), and the control (60) is configured to determine at least one intensity characteristic value (Ig) therefrom,

the clamping device (52) is configured to rotatably mount the workpiece (30, 32), and the angle-of-rotation sensor (56) is configured to detect an angle of rotation ($\beta$),

the control (60) is configured to orient the sensor (10) by means of the positioning device (58) relative to the workpiece such that its measuring axis (20) intersects in a pressure point (B1, B2) the ball track (L1, L2) and the normal to the longitudinal axis (40) of the workpiece (30, 32) at a predetermined pressure point angle ($\epsilon 1$) and in doing so has a predetermined distance to the pressure point (B1, B2), wherein the pressure point angle ($\epsilon 1$) corresponds to the angle at which the measuring axis (20) of the sensor (10) is perpendicular to the ball track (L1),

in a setting mode, to change the relative position of the workpiece (30, 32) to the sensor (10) and to determine an initial state ($x1, \beta 1$) in which the intensity characteristic value (Ig) has a maximum,

subsequently, in a measuring mode, given a fixed position of the sensor (10), to rotate the workpiece (30, 32) by means of the drive (54), wherein the control (60) is configured to move the sensor (10), starting from the determined initial state ($x1, \beta 1$), in synchrony with the angle of rotation ($\beta$) in the direction (x) parallel to the longitudinal axis (40) of the workpiece (30) by the positioning device (58) and in doing so to scan the ball track (L1, L2), wherein the control (60) calculates at least one characteristic value (Aq; Aq*, M) regarding the surface quality,

wherein in said setting mode, the control (60) is configured to rotate the workpiece (32) relative to the position of the sensor (10) and to determine as an initial state an initial angle of rotation ($\beta 1$) at which the intensity characteristic value (Ig) has a maximum,

and/or in said setting mode, the control (60) is configured to displace the workpiece (32) relative to the position of the sensor (10) in the direction (x) of the longitudinal axis and to determine as an initial state an initial position (x1) at which the intensity characteristic value (Ig) has a maximum,

wherein in this setting mode, at least the intensity of the medium photodetector (18) of the line sensor (16) is used as an intensity characteristic value (Ig).

8. The device according to one of the preceding claims, in which in the setting mode, the sum of the intensities of several or all photodetectors (18) of the line sensor (16) is determined as an intensity characteristic value (Ig).

9. The device according to one of the preceding claims, in which the sensor (10) is mounted in the positioning device (58) movably parallel to the longitudinal axis of the workpiece (32) and/or perpendicularly thereto and/or rotatably about at least one axis of rotation to adjust various test positions.

10. The device according to one of the preceding claims, in which two similar sensors (10) are mounted in the positioning device such that they simultaneously measure both ball tracks (L1, L2) in threads of the workpiece (32).

11. The device according to one of the preceding claims, in which the sensor (10) with its measuring axis (20) is pivotable about the pressure point angle ($\epsilon 1$) in order to determine characteristic values regarding the surface quality along several adjacent measuring lines on the ball track (L1, L2).

## Revendications

1. Procédé d'évaluation sans contact de l'état de surface d'un chemin de roulement à billes (L1, L2) d'une pièce de mécanisme de vis-écrou à billes (30) selon la technique de mesure utilisant la lumière diffusée à résolution angulaire,

selon lequel un capteur optique (10) émet un faisceau lumineux (24) présentant une répartition des intensités définie sur le chemin de roulement à billes (L1, L2) de la pièce (30), lequel chemin est à évaluer, et éclaire un point de mesure (14),

l'intensité (Ii) réfléchie du rayonnement est détectée au moyen d'un capteur linéaire (16) présentant un nombre discret (i) de photodétecteurs (18) dans une plage angulaire ($\alpha$) définie et au moins une valeur caractéristique d'intensité (Ig) en est déduite,

la pièce (30, 32) est montée en rotation dans un dispositif de serrage (52) et l'angle de rotation ($\beta$) est acquis par un capteur d'angle de rotation (56),

le capteur (10) est orienté par rapport à la pièce de telle sorte que son axe de mesure (20) coupe en un point de pression (B1, B2) le chemin de roulement à billes (L1, L2) et la normale à l'axe longitudinal (40) de la pièce (30, 32) en formant un angle de point de pression ($\epsilon 1$) prédéfini et présente ce faisant un écart prédéfini par rapport au point de pression (B1, B2), dans lequel l'angle de point de pression ($\epsilon 1$) correspond à l'angle selon lequel l'axe de mesure (20) du capteur (10) est perpendiculaire au chemin de roulement à billes (L1),

dans un mode installation, la position relative de la pièce (30, 32) par rapport au capteur (10) est modifiée et un état de départ ($x1, \beta 1$) est déterminé, pour lequel la valeur caractéristique d'intensité (Ig) présente un maximum,

ensuite, dans un mode mesure, lorsque le capteur (10) se trouve dans une position fixe, la pièce (30, 32) est amenée en rotation, dans lequel le capteur (10) est déplacé de l'état de départ (x1, β1) déterminé en synchronisme avec l'angle de rotation (β) dans la direction (x) parallèle à l'axe longitudinal (40) de la pièce (30) et, ce faisant, balaye le chemin de roulement à billes (L1, L2), dans lequel une commande (60) calcule au moins une valeur caractéristique (Aq ; Aq*, M) relative à l'état de surface,

dans lequel, dans ledit mode installation, la pièce (32) est amenée en rotation par rapport à la position du capteur (10) et un angle de rotation de départ (β1) est déterminé comme état de départ, angle pour lequel la valeur caractéristique d'intensité (Ig) présente un maximum,

et/ou dans ce mode installation, la pièce (32) est amenée à coulisser par rapport à la position du capteur (10) dans la direction (x) de l'axe longitudinal et une position de départ (x1) est déterminée comme état de départ, position pour laquelle la valeur caractéristique d'intensité (Ig) présente un maximum,

dans lequel, dans ce mode installation, au moins l'intensité du photodétecteur (18) central du capteur linéaire (16) est utilisée comme état de départ.

**2.** Procédé selon la revendication 1, selon lequel, dans le mode installation, la somme des intensités de plusieurs photodétecteurs (18) du capteur linéaire (16) ou de tous les photodétecteurs est déterminée comme valeur caractéristique d'intensité (Ig).

**3.** Procédé selon l'une quelconque des revendications précédentes, selon lequel le capteur (10) est monté dans un dispositif de positionnement (58) de manière à pouvoir coulisser parallèlement à l'axe longitudinal de la pièce (32) et/ou perpendiculairement à celui-ci et/ou de manière à pouvoir tourner autour d'au moins un axe de rotation, afin de régler différentes positions de contrôle.

**4.** Procédé selon l'une quelconque des revendications précédentes, selon lequel le capteur (10) est monté de manière à pouvoir tourner autour de son axe de mesure (20), afin de déterminer des valeurs caractéristiques pour la rugosité transversale et la rugosité longitudinale.

**5.** Procédé selon l'une quelconque des revendications précédentes, selon lequel le capteur (10) peut pivoter avec son axe de mesure (20) autour de l'angle de point de pression (ε1), afin de déterminer des valeurs caractéristiques relatives à l'état de surface le long de plusieurs lignes de mesure voisines sur le chemin de roulement à billes (L1, L2).

**6.** Procédé selon l'une quelconque des revendications précédentes, selon lequel, dans le mode mesure, la rugosité longitudinale et/ou la rugosité transversale et/ou l'ondulation sont calculées comme valeur caractéristique au moyen de la commande (60) assistée par ordinateur.

**7.** Dispositif d'évaluation sans contact de l'état de surface d'un chemin de roulement à billes (L1, L2) d'une pièce de mécanisme de vis-écrou à billes (30) selon la technique de mesure utilisant la lumière diffusée à résolution angulaire, comportant un capteur optique (10), un capteur linéaire (16) pourvu d'un nombre discret (i) de photodétecteurs (18), un dispositif de serrage (52), un dispositif de positionnement (58), un entraînement (54) et une commande (60),

pour lequel le capteur optique (10) émet un faisceau lumineux (24) présentant une répartition des intensités définie sur le chemin de roulement à billes (L1, L2) de la pièce (30), lequel chemin est à évaluer, et éclaire un point de mesure (14),

l'intensité ($I_i$) réfléchie du rayonnement est détectée au moyen du capteur linéaire (16) présentant le nombre discret (i) de photodétecteurs (18) dans une plage angulaire (α) définie et la commande (60) est conçue pour en déduire au moins une valeur caractéristique d'intensité (Ig),

le dispositif de serrage (52) est conçu pour monter la pièce (30, 32) en rotation et le capteur d'angle de rotation (56) est conçu pour acquérir un angle de rotation (β),

la commande (60) est conçue pour orienter le capteur (10) par rapport à la pièce au moyen du dispositif de positionnement (58), de telle sorte que son axe de mesure (20) coupe en un point de pression (B1, B2) le chemin de roulement à billes (L1, L2) et la normale à l'axe longitudinal (40) de la pièce (30, 32) en formant un angle de point de pression (ε1) prédéfini et présente ce faisant un écart prédéfini par rapport au point de pression (B1, B2), dans lequel l'angle de point de pression (ε1) correspond à l'angle selon lequel l'axe de mesure (20) du capteur (10) est perpendiculaire au chemin de roulement à billes (L1),

dans un mode installation, pour modifier la position relative de la pièce (30, 32) par rapport au capteur (10) et pour déterminer un état de départ (x1, β1), pour lequel la valeur caractéristique d'intensité (Ig) présente un maximum,

ensuite, dans un mode mesure, lorsque le capteur (10) se trouve dans une position fixe, pour amener la pièce (30, 32) en rotation, dans lequel la commande (60) est conçue pour déplacer le capteur (10) de l'état de départ (x1, β1) déterminé en synchronisme avec l'angle de rotation (β) dans la direction (x) parallèle à l'axe longitudinal (40) de la pièce (30) par l'intermédiaire du dispositif de positionnement (58) et, ce faisant, pour balayer le chemin de roulement à billes (L1, L2), dans lequel la commande (60) calcule au moins une valeur caractéristique (Aq ; Aq*, M) relative à l'état de surface,

dans lequel, dans ledit mode installation, la commande (60) est conçue pour amener en rotation la pièce (32) par rapport à la position du capteur (10) et pour déterminer un angle de rotation de départ ($\beta$1) comme état de départ, pour lequel la valeur caractéristique d'intensité (Ig) présente un maximum,

et/ou, dans ledit mode installation, la commande (60) est conçue pour faire coulisser la pièce (32) par rapport à la position du capteur (10) dans la direction (x) de l'axe longitudinal et pour déterminer comme état de départ une position de départ (x1), pour laquelle la valeur caractéristique d'intensité (Ig) présente un maximum,

dans lequel, dans ce mode installation, au moins l'intensité du photodétecteur (18) central du capteur linéaire (16) est utilisée comme valeur caractéristique d'intensité (Ig).

8. Dispositif selon l'une quelconque des revendications précédentes, pour lequel, dans le mode installation, la somme des intensités de plusieurs photodétecteurs (18) du capteur linéaire (16) ou de tous les photodétecteurs est déterminée comme valeur caractéristique d'intensité (Ig).

9. Dispositif selon l'une quelconque des revendications précédentes, pour lequel le capteur (10) est monté dans le dispositif de positionnement (58) de manière à pouvoir coulisser parallèlement à l'axe longitudinal de la pièce (32) et/ou perpendiculairement à celui-ci et/ou de manière à pouvoir tourner autour d'au moins un axe de rotation, afin de régler différentes positions de contrôle.

10. Dispositif selon l'une quelconque des revendications précédentes, pour lequel deux capteurs (10) similaires sont montés dans le dispositif de positionnement, de manière à mesurer simultanément les deux chemins de roulement à billes (L1, L2) dans des filetages de la pièce (32).

11. Dispositif selon l'une quelconque des revendications précédentes, pour lequel le capteur (10) peut pivoter avec son axe de mesure (20) autour de l'angle de point de pression ($\varepsilon$1), afin de déterminer des valeurs caractéristiques relatives à l'état de surface le long de plusieurs lignes de mesure voisines sur le chemin de roulement à billes (L1, L2).

FIG. 1

EP 3 088 130 B1

Fig. 2

Fig. 3

Fig. 4

Fig. 5

Fig. 6

Fig. 7

EP 3 088 130 B1

EP 3 088 130 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2657686 A1
- DE 102014116966
- US 4644394 A

**In der Beschreibung aufgeführte Nicht-Patentliteratur**

- **RAINER BRODMANN et al.** Kenngrößen der Mikrostruktur definiert. QZ Jahrgang, 2008, vol. 7, 46-49
- **RAINER BRODMANN et al.** Kenngrößen der Mikrostruktur definiert. QZ Jahrgang, 2008, vol. 7, 46-49
- **KUANG-CHAO FAN et al.** Development of an automatic cumulative-lead error measurement system for ballscrew nuts. *International Journal of Advanced Manufacturing Technology,* 23. Marz 2013, vol. 72 (1-4), 17-23